# EUROPÄISCHE PATENTANMELDUNG

(11) **EP 1 710 646 A2**
(43) Veröffentlichungstag der Anmeldung: **11.10.2006**
(21) Anmeldenummer: 06004936.8
(22) Anmeldetag: 10.03.2006
(51) Int. Cl.: G05B 19/418

(54) **Verfahren und Vorrichtung zur Lageerkennung eines Formteils**

(30) Priorität: 12.03.2005 DE 102005011330
(71) Anmelder: Dorst Technologies GmbH & Co. KG, 82431 Kochel am See (DE); Pi4_robotics GmbH, 13355 Berlin (DE)
(72) Erfinder: Krinke, Matthias, 13355 Berlin (DE); Hammerl, Johann, 83671 Benediktbeuern (DE); Krausert, Norbert Josef, 82431 Kochel am See (DE)
(74) Vertreter: Schulze, Mark

(57) **Zusammenfassung**

Die Erfindung bezieht sich auf Verfahren zur Lageerkennung eines, insbesondere nicht rotationssymmetrischen Formteils (2) aus beispielsweise keramischem oder metallischem Material, bei dem
- mittels einer Lichtquelle (11) das Formteil (2) punkt- oder linienförmig unter einem ersten Winkel angeleuchtet wird und mittels einer Kamera (10) ein Kamerabild unter einem dazu verschiedenen Winkel aufgenommen wird zum Bereitstellen eines dreidixnensionalen Abbildes des Formteils (2),
- eine Kontur (K1) innerhalb des Formteils (2) erfasst wird und
- mittels der Kontur auf die Lage des Formteils (2) geschlossen wird,

wobei vor oder bei dem Konturerfassen Datenanteile nicht relevanter Daten des Kamerabildes durch deren Ausblenden reduziert werden.

## Beschreibung

Die Erfindung bezieht sich auf Verfahren und eine Vorrichtung zur Lageerkennung eines Formteils mit den oberbegrifflichen Merkmalen der Patentansprüche 1 bzw. 17.

DE 101 58 707 A1 beschreibt ein Verfahren zur Herstellung von unrunden bzw. nicht rotationssymmetrischen keramischen Pressartikeln unter Einsatz einer Lageerkennung. Die Lage bzw. Orientierung des Pressartikel-Rohlings wird nach dem Pressen und vor dem Verputzen bestimmt, indem Markierungen an Bereichen des Artikel-Rohlings vorgesehen sind, welche vor dem Verputzen oder während des Verputzens von dem Artikel-Rohling entfernt werden, Nachteilhafterweise muss zum Einbringen solcher Markierungen ein dicker Rand außerhalb der gewünschten Außenkontur gepresst werden, um die Markierungen entsprechend sicher erkennbar in den Rand einbringen zu können. Dies macht ein kompliziertes Werkzeug für den Pressvorgang erforderlich.

DE 100 28 297 A1 beschreibt eine Putzeinrichtung für beliebig geformte Keramikartikel als Formteile. An einer Zuführung für ungeputzte Keramikartikel ist eine Einrichtung zum Erkennen der Form der Keramikartikel vorgesehen. Die Orientierung des Artikels wird nur anhand seiner Außenkontur erkannt. Bei der Umsetzung wird beim Pressen ein breiter Rand außerhalb der eigentlichen Außenkontur des Artikels beim Pressen belassen, wobei im Bereich der gewünschten Außenkontur des Artikels eine Sollbruchstelle eingepresst wird. Der außenseitige Rand wird nachfolgend mit einer Grobputzmaschine weggebrochen.

Nachteilhaft bei derartigen Verfahren ist, dass stets ein eigentlich unerwünschter Rand beim Pressen des keramischen Formteils belassen wird, um anhand des Randes oder anhand von Markierungen in einem solchen Rand eine Orientierung des nicht rotationssymmetrischen Formteils auf einem Transportband erkennen zu können.

Die Kenntnis der genauen Lage eines Formteils auf einem Transportband ist insbesondere bei unrunden bzw. nicht rotationssymmetrischen Formteilen wichtig, damit ein Roboter zur weiteren Bearbeitung das Formteil greifen und einer Bearbeitungsvorrichtung, insbesondere Putzvorrichtung richtig zuführen kann. Mit einer Putzvorrichtung werden Pressgrate und gegebenenfalls Unebenheiten des Pressvorgangs von dem gepressten Formteil verputzt und/oder weggebürstet.

Ein weiteres Problem beim Putzen bzw. Nachbearbeiten eines solchen Formteils aus einem gepressten keramischen oder metallischen Material besteht darin, dass sich das Formteil nach dem Entformen aus der Presse entspannt und ausdehnt. Abhängig von der jeweils momentan verwendeten Pulverkonsistenz des zu verpressenden Rohmaterials ist dabei die Ausdehnung nicht exakt gleich, so dass für das Verputzen eines solchen Formteils ein Durchschnittswert einer zu putzenden Kontur des Formteils zur Programmierung der Putzvorrichtung verwendet wird. Im Fall von Abweichungen von diesem verwendeten Maß werden die Konturen der Formteile entsprechend zu stark oder nicht ausreichend stark verputzt.

Das Programmieren einer Putzvorrichtung, welches auch als teachen bezeichnet wird, erfolgt dadurch, dass ein gepresstes und entspanntes Formteil manuell der Putzmaschine zugefuhrt wird, wobei jeweils für den Bewegungsablauf relevante Konturpunkte des Formteils an einen Messpunkt angehalten werden. Der das Formteil dabei haltende Roboter registriert die entsprechenden Positionen der Messpunkte und interpoliert den dazwischen liegendenden Streckenverlauf zur Festlegung der zu putzenden Kontur des Formteils.

Zur Lageerkennung eines Objektes sind Anordnungen aus einer Kamera und einer Lichtquelle bekannt, mit denen ein zweidimensionales oder ein dreidimensionales Bild aufgenommen wird. Bei dreidimensionalen Systemen ist ein sogenanntes Liehtschnittvorfahren bekannt. Auch der Einsatz von Stereokamerasystemen mit Lichtprojektoren ist allgemein bekannt. Bei zweidimensionalen Kamerasystemen kann mit Konturalgorithmen eine Außenkontur eines Formteils bei entsprechender Beleuchtung sehr robust und zügig erfasst werden. Relevante Konturen innerhalb der Außenkonturen sind jedoch nicht zuverlässig erfassbar, da die Ausleuchtung der Kontur sehr spezifisch und jeweils abgestimmt für das jeweilige Formteil erfolgen muss. Dreidimensionale Erfassungssysteme auf Basis von Lichtschnitt- oder Stereokamerasystemen können zwar auch relevante Produktkonturen innerhalb der Formteile erfassen, sind jedoch aufgrund der dabei anfallenden sehr hohen Datenmenge in Form einer Punktwolke nicht in der Lage, eine ausreichende Geschwindigkeit bei der Lageerkennung eines Formteils zu gewährleisten.

Die Aufgabe der Erfindung besteht darin, ein Verfahren und eine Vorrichtung zur Lageerkennung eines Formteils bereitzustellen, welche eine verbesserte und schnelle Lageerkennung des Formteils ermöglichen. Vorteilhafterweise sollen außerdem ein Verfahren und eine Vorrichtung zum Bearbeiten, insbesondere Putzen eines derartigen Formteils bereitgestellt werden, welche eine verbesserte, insbesondere genauere Bearbeitung des Formteils nach der Lageerkennung ermöglichen.

Diese Aufgabe wird durch ein Verfahren zur Lageerkennung eines Formteils mit den Merkmalen des Patentanspruchs 1, durch eine Vorrichtung zur Lageerkennung eines Formteils mit den Merkmalen des Patentanspruches 17, durch ein Verfahren zum Programmieren einer Bearbeitungskontur eines Formteils mit den Merkmalen des Patentanspruchs 19, bzw. durch eine Vorrichtung zum Bearbeiten eines Formteils mit den Merkmalen des Patentanspruchs 21 gelöst. Vorteilhafte Ausgestaltungen sind Gegenstand abhängiger Ansprüche.

Bevorzugt wird insbesondere ein Verfahren zur Lageerkennung eines insbesondere nicht rotationssymmetrischen Formteils, bei dem mittels einer Lichtquelle das Formteil punkt- oder linienförmig unter einem ersten Winkel angeleuchtet wird und mittels einer Kamera ein Kamerabild unter einem dazu verschiedenen Winkel aufgenommen wird zum Bereitstellen eines dreidimensionalen Abbildes des Formteils, eine Kontur innerhalb des Abbildes des Formteils erfasst wird und mittels der Kontur auf die Lage des Formteils geschlossen wird, wobei vor oder bei dem Konturerfassen Datenanteile nicht relevanter Daten des Kamerabildes durch deren Ausblenden reduziert werden.

Bevorzugt wird insbesondere ein Verfahren, bei dem das Kamerabild als Höheninfonnationsbild bereitgestellt wird.

Bevorzugt wird insbesondere ein Verfahren, bei dem das Höheninformationsbild als Graustufenbild mit verschiedenen Grautonwerten für verschiedene Formteilhöhen bereitgestellt wird.

Bevorzugt wird insbesondere ein Verfahren, bei dem vor dem Konturerfassen strukturloser Bereiche, insbesondere ein Bodenbereich des Formteils, ein Umgebungsbereich und/oder ein Randbereich mit einer Außenkontur ausgeblendet.

Bevorzugt wird insbesondere ein Verfahren, bei dem potenziell fehlerbehaftete Bereiche, insbesondere ein Randbereich mit Pressgrat ausgeblendet werden. Unter dem Ausblenden wird auch ein nicht durchgeführtes Betrachten oder Auswerten verstanden, da eine Auswertung keinen Sinn macht

Bevorzugt wird insbesondere ein Verfahren, bei dem Mosstotbereiche, insbesondere bei der Aufnahme des Kamerabildes abgeschattete Bereiche oder je nach Formteilausrichtung möglicherweise abgeschattete Bereiche ausgeblendet werden.

Bevorzugt wird insbesondere ein Verfahren, bei dem Steigungskanten als Kontur zum Konturerfassen verwendet werden.

Bevorzugt wird insbesondere ein Verfahren, bei dem verschiedene Konturebenen als Kontur zum Konturerfaasen verwendet werden.

Bevorzugt wird insbesondere ein Verfahren, bei dem eine oder mehrere bestimmte Konturen aus einer Vielzahl möglicher Konturen zum Konturerfassen ausgewählt werden.

Bevorzugt wird insbesondere ein Verfahren, bei dem eine oder mehrere kontrastreiche Konturen aus einer Vielzahl möglicher Konturen zum Konturerfassen ausgewählt werden.

Bevorzugt wird insbesondere ein Verfahren, bei dem eine Auswahl von zum Konturerfassen zu verwendenden Konturen aus einer Vielzahl möglicher Konturen nach einer vorgebbaren Umfangslänge bestimmter Konturen durchgeführt wird.

Bevorzugt wird insbesondere ein Verfahren, bei dem mittels eines Ur-Formteils eine Vielzahl von Lagebildern des Ur-Formteils hinsichtlich aller oder bestimmter ausgewählter Konturen bestimmt und gespeichert wird und ein Vergleich der Lage eines zu erfassenden Formteils hinsichtlich dessen Kontur oder Konturen zu der Lage entsprechender gespeicherter Konturen des Ur-Formteils durchgeführt wird. Diese Vielzahl von Lagebildern kann z.B. rechnerisch durch Rotation des aufgenommenen Abbildes erzeugt werden, indem die einzelnen Kopien des Abbildes zueinander rotiert oder versetzt werden.

Bevorzugt wird insbesondere ein Verfahren, bei dem der Vergleich der Lage einer Kontur des Formteils mit dem Vergleich einer entsprechenden Kontur des Ur-Formteils anhand der Winkellage der Kontur des Formteils zu der Kontur des Ur-Formteils durchgeführt wird.

Bevorzugt wird insbesondere ein Verfahren, bei dem eine Lagetoleranz des Formteils beim Konturerfassen und/oder bei der Lageerkennung berücksichtigt wird.

Bevorzugt wird insbesondere ein Verfahren, bei dem die mittels des Konturerfassens bestimmten Lagedaten des Formteils für nachfolgende automatische Bearbeitungen des Formteils verwendet werden.

Bevorzugt wird insbesondere ein Verfahren, bei dem aus der Lage einer Kontur innerhalb des Formteils auf eine Sollkontur an einer anderen Stelle des Formteils, insbesondere am Rand des Formteils geschlossen wird.

Bevorzugt wird insbesondere eine Lageerkennungsvorrichtung zum Durchführen eines solchen Verfahrens mit einer Zulühnmgsvorrichtung zum Zuführen eines Formteils, einer Lichtquelle zum Beleuchten des Formteils mit einem punkt- und/oder linienförmigen Lichtstrahl, einer Kamera zum Aufnehmen eines Kamerabildes unter einem Winkel ungleich einem Beleuchtungswinkel des Lichtstrahls zum Aufnehmen eines dreidimensionalen Kamerabildes des Formteils, einer Handhabungsvorrichtung und/oder einer Nachbearbeitungsvorrichtung, insbesondere einem Roboter und einer Putzvorrichtung, und einer Steuereinrichtung zum Steuern der Anordnung und Durchführen des Verfahrens zur Lageerkennung.

Bevorzugt wird insbesondere eine Lageerkennungsvorrichtung, wobei die Kamera und die Lichtquelle relativ zum Formteil mittels eines Schlittens bewegbar sind.

Bevorzugt wird insbesondere ein Verfahren zum Programmieren einer Bearbeitungskontur, insbesondere Putzkontur eines Formteils zum Bearbeiten des Formteils in einer Bearbeitungsvomchtung, insbesondere Putzvorrichtung, längs der Bearbeitungskontur, wobei eine tatsächliche Bearbeitungskontur als die Bearbeitungskontur mittels einer optischen Lageerkennungsvorrichtung und/oder eines optischen Lageerkennungsverfahrens zum Programmieren verwendet wird.

Bevorzugt wird insbesondere ein Verfahren, bei dem eine Bewegungsbahn des Formteils relativ zur Bearbeitungsvorrichtung anhand der tatsächlichen Kontur programmiert wird.

Bevorzugt wird insbesondere eine Bearbeitungsvorrichtung, insbesondere Putzvorrichtung zum Bearbeiten eines Formteils mittels eines solchen Verfahrens.

Bevorzugt wird insbesondere ein Verfahren bzw. Vorrichtung, wobei die Lichtquelle ein linienförmiges Laserlicht auf das Formteil strahlt.

Insbesondere ist unter einem Formteil ein frei geformter Körper zu verstehen, wobei die verfahrensweise zur Formgebung nicht relevant ist.

Ein Ausführungsbeispiel wird nachfolgend anhand der Zeichnung näher erläutert. Es zeigen:
- Fig. 1: schematisch eine seitliche Ansicht einer Anlage zum Herstellen und Verputzen von Formteilen aus keramischem und/oder metallischem gepressten Material unter Einsatz einer Lageerkennung,
- Fig. 2: eine Teilschnittansicht durch ein nicht rotationssymmetrisches bzw. unrundes Formteil,
- Fig. 3: ein Ablaufdiagramm bevorzugter Verfahrensschritte zur Datenverarbeitung im Rahmen der Lageerkennung des Formteils und
- Fig. 4: eine Relativbewegung einer Putzvorrichtung gegenüber einer Außenkontur eines nicht rotationssymmetrischen Formteils.

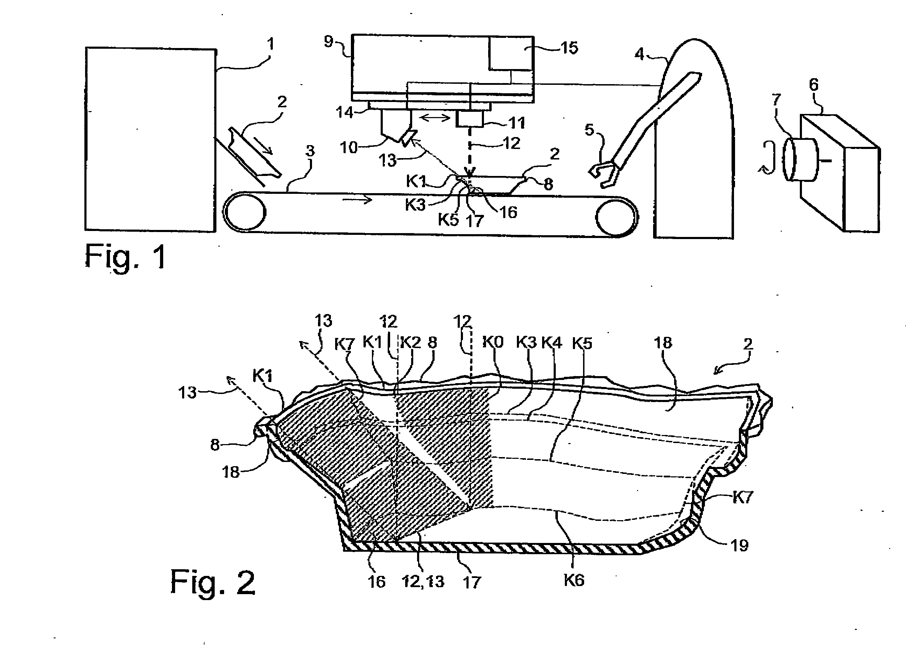

Wie dies aus Fig. 1 ersichtlich ist, werden von einer Presse 1 Formteile 2 hergestellt und nach dem Entformen insbesondere hinsichtlich der Lageausrichtung unkontrolliert auf ein Transportband 3 gebracht. Die Formteile 2 sind vorzugsweise aus einem keramischen und/oder metallischen pulver- oder granulatförmigen Material gepresst. Das Transportband 3 befördert die Formteile 2 zu einem Roboter 4. Der Roboter 4 entnimmt mit einem Greifarm 5 jeweils ein berantransportiertes Formteil 2 vom Transportband 3 und führt das Formteil 3 zu einer Bearbeitungsvorrichtung, insbesondere einer Putzvorrichtung 6. Mittels z.B. eines Schleifwerkzeugs, einer Bürste 7 und/oder einem Schwamm wird die Außenkontur des Formteils 2 gesäubert, verputzt oder in sonstiger Art und Weise nachbearbeitet. Insbesondere wird beim Verputzen ein während des Pressvorgangs zwischen einzelnen Formen der Presse 1 entstandener Grat 8 vom Außenumfang des Formteils 2 entfernt, wobei der Grat 8 anhand des in Figur 2 skizzierten Formteils 2 bildlich dargestellt ist.

Insbesondere im Fall eines nicht rotationssymmetrischen bzw. unrunden Formteils 2 besteht das Problem, dass das Formteil 2 nach dem Entformen aus der Presse 1 unkontrolliert mit einer beliebigen Ausrichtung auf das Transportband 3 rutscht. Zum exakten Nachbearbeiten muss der Roboter 4 jedoch die exakte Orientierung bzw. Lage des Formteils 2 auf dem Transportband 3 zur korrekten Aufnahme und Zuführung zur Bearbeitungsvorrichtung 6 kennen.

Zur Lageerkennung dient eine Lagserkennungsvorrichtung 9, welche zwischen der Presse 1 und dem Roboter 4 oberhalb des Transportbands 3 angeordnet ist. Zur Vermeidung von störenden Lichteinfällen sind die optischen Komponenten der Lageerkennungsvorrichtung 9 oder die gesamte Lageerkennungsvorrichtung 9 vorzugsweise in einem nach außen hin abgedunkelten Raum angeordnet. Die bevorzugte Lageerkennungsvorrichtung 9 umfasst eine Kamera 10 und eine Lichtquelle 11. Die Lichtquelle 11 wird vorzugsweise durch einen Laser ausgebildet, der einen linienförmigen Lichtstrahl 12 nach unten auf ein Formteil 2 abstrahlt, Die Kamera 10 nimmt ein von der Oberfläche des Formteils 2 reflektiertes Linienbild 13 des Formteils 2 auf. Zur Ermöglichung eines dreidimensionalen Bildes ist die Kamera 10 unter einem Winkel zur Lichtquelle 11 angeordnet. Beispielsweise strahlt die Lichtquelle 11 ein linienförmiges Laserlicht senkrecht nach unten auf das Formteil und die Kamera 10 nimmt ein Bild unter beispielsweise einem Winkel von 45° auf. Jedoch sind auch andere Winkelverhältnisse entsprechend der zu untersuchenden Formteilkonturen und Formteildimensionen einsetzbar.

Zur Erstellung eines vollständigen Bildes des Formteils 2 besteht prinzipiell die Möglichkeit, das Formteil 2 mittels des Transporthandes 3 unter einer solchen Lageerkennungsvorrichtung 9 vorzubewegen. Zur Verbesserung der Lageerkennung wird jedoch eine Anordnung von Kamera 10 und Lichtquelle 11 an einem schienengeführten Schlitten 14 bevorzugt. Mit einer solchen Schlittenführung werden Kamera 10 und Lichtquelle 11 längs über das Formteil 2 geführt, um dieses in einzelnen Schnitten oder vollständig aufzunehmen. Sofern es sich bei der Lichtquelle 11 um eine punktförmige Lichtquelle handelt, wird vorzugsweise ein schrittweiser Vorschub des Schlittens 14 vorgenommen, wobei jeweils pro Vorschubschritt eine vollständige Bildzeile durch seitliches Verschwenken der Lichtquelle 11aufgezeichnet wird.

Zur Ansteuerung der Kamera 10, der Lichtquelle 11, des Schlittenantriebs des Schlittens 14 und des Transportbands 3 dienen eine oder mehrer Steuereinrichtungen, insbesondere eine zentrale Steuereinrichtung 15, welche beispielsweise in der Lageerkennungsvorrichtung 9 oder in einem separaten Schaltschrank angeordnet ist. Vorteilhafterweise kann eine solche zentrale Steuereinrichtung 15 auch die Ansteuerung des Roboters 4 und gegebenenfalls der Bearbeitungsvorrichtung 6 übemehmen,

Fig. 2 zeigt ein beispielhaftes Formteil 2 mit einer nicht symmetrischen bzw. unrunden Form. Eine üblicherweise für Lagecrkennungsverfahren verwendbare besonders scharfe erste Kontur K1 wird durch den Außenrand des Formteils 2 ausgebildet. Bei Pressteilen als Formteilen 2 aus einem keramischen oder metallischen Material besteht jedoch das Problem, dass an der durch die erste Kontur K1 gebildeten Außenkontur üblicherweise der Grat 8 als ein Pressgrad anhaftet. Dieser Grat 8 muss im Rahmen einer nachfolgenden Bearbeitung entfernt werden.

Eine zweite Kontur K2 entsteht beispielsweise durch den Übergang vom oberseitigen, flachen Rand des Formteils 2 zu dessen innenseitiger Innenwand 18. Eine dritte, üblicherweise markante Kontur K6, wird durch den Übergang der Seitenwand 18 zur Bodenwand 17 gebildet. Bei dem dargestellten Formteil 2 sind weitere Konturen K3, K4, K5, K7 durch eine entsprechend strukturierte Wandungsform ausgebildet. Zwei dieser Konturen K3, K4 bilden beispielsweise einen schmalen Absatz in der innenseitigen Wandung des Formteil 2 aus. Weitere durch die Lageerkennungsvorrichtung 9 gegebenenfalls erfassbare Konturen werden z. B. durch einen abgerundeten Verlauf 19 der innenseitigen Wandung des Formteils 2 ausgebildet.

Im Fall von Formteilen 2 mit einer Seitenwandung, welche in Richtung der Kamera 10 ausgerichtet ist und steiler verläuft als der Aumahmewinkel des von dem Formteil 2 reflektierten und von der Kamera 10 aufgenommenen Lichtes 13 entstehen Schattenbereiche 16, d. h. Flächen des Formteils 2, welche auf einem Kamerabild nicht abbildbar sind. Erfassbar in solchen Fällen ist gegebenenfalls eine markante Schattenkontur K0 im Übergangsbereich zwischen von der Kamera erfassten und von der Kamera 10 nicht erfassbaren Innenwandungen des Formteils 2.

Zur effektiven und schnellen Erfassung der Lage des Formteils 2 durch die Lagerkennungsvorriehtung 9 wird eine Vielzahl vorteilhafter Verfahrensschritte unter Ausnutzung gegebenenfalls vorhandener Hardware ausgenutzt. Ziel ist ein automatisches Kontur- und Lageerfassungssystem, welches dreidimensionale Daten des Formteils 2 aufzeichnet und zur weiteren Verarbeitung, insbesondere zur Steuerung des Roboters 4 bereitstellt, Mittels spezieller Datenextraktiolisalgorithmen werden dabei die Position sowie die relevanten Konturen des Formteils 2 bestimmt. Durch den Bediener der gesamten Anlage werden mittels eines Urmodells, d. h. eines repräsentativen und optimal nachbearbeiteten Formteils, notfalls aber auch mit Hilfe eines unbearbeiteten Formteils zu unterschiedlichsten Formteilen individuelle relevante Konturen festgelegt, welche dann als Basis für eine Lage- und Konturerkennung heanziehbar sind. Inklusive Ein- und Ausfahrzeit des Formteils 2 unter die Lageerkennungsvorrichtung 9 sind entsprechend erster Versuche bei einem unrunden Keramikieller Zeiten zur Lage- und Konturdatenerfassung von weniger als zehn Sekunden möglich.

Derart ermittelte Lage- und/oder Konturdaten können von der Steuereinrichtung 15 an nachfolgende Vorrichtungen wie den Roboter 4 und die Bearbeitungsvorrichtung 6 übermittelt werden, um ein präzises Greifen und Bearbeiten des Formteils 2 zu ermöglichen. Insbesondere kann eine Bearbeitung des Formteils 2 anhand der tatsächlichen formteilindividuellen Konturen des Formteils 2 durchgeführt werden. Dadurch sind auch Schwankungen der Formteildimension des Formteils 2 nach einem Pressvorgang mit üblicherweise schwankenden Dimensionen von Formteil zu Formteil möglich.

Neben der Lage- und/oder Konturerkennung von Formteilen 2 aus einem keramischen und/oder metallischen Material, welche durch einen Pressvorgang gefertigt wurden, ist der Einsatz einer solchen Lageerkennungsvorrichtung 9 sowie gegebenenfalls nachfolgender Bearbeitungsvorrichtungen und Bearbeitungsverfahren auch für Formteile 2 einsetzbar, welche andersartig und/oder aus anderen Materialen gefertigt sind. Beispielsweise kann im Fall eines im Spritzgussverfahren hergestellten Kunststoff-Formteils ein Anguss mittels eines Entgratungswerkzeugs entfernt werden. Der Einsatz einer derartigen Lageerkennungsvorrichtung 9 ist aber auch im Bereich der Lebensmitteltechnik, zum Dekorieren von Teilen, in der Automobilindustrie oder in der Elektronik, beispielsweise zur Leiterplattenkontrolle oder Leiterplattenbestückung in der Elektronik einsetzbar. Anstelle eines Roboters können auch andere Haudhabungsvorrichtungen eingesetzt, mit entsprechenden Lagkoordinaten versorgt und/oder angesteuert werden. Vorteilhaft einsetzbar sind Verfahren und Vorrichtung natürlich auch für normale rotationssymmetrische Körper.

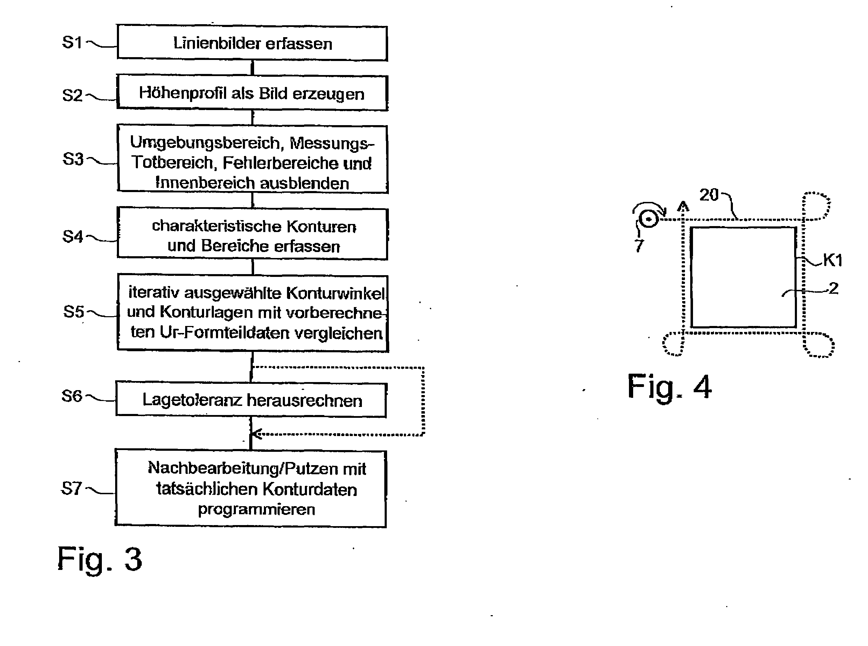

Wie aus Fig. 3 ersichtlich, erfolgt ein Verfahren zu Lageerkennung eines Formteils vorzugsweise unter Anwendung einer Vielzahl von Schritten zur Reduzierung des Datenvolumens bzw. zur Erkennung der Lage bzw. Ausrichtung des nicht rotationssymmetrischen Formteils 2. In einem ersten Schritt S 1 werden mittels der Lageerkennungsvorrichtung, insbesondere mittels der Lichtquelle 11 und der Kamera 10 Linienbilder erfasst und durch die Kamera 10 oder einen separaten Prozessor, beispielsweise der Steuereinrichtung 15 zu einem Kamerabild zusammengestellt. In einem nachfolgenden Schritt S2, der vorteilhafterweise auch mit dem vorherigen Schritt kombinierbar ist, wird das Kamerabild als ein Höhenprofil erzeugt. Vorzugsweise stellen unterschiedliche Grauwerte des Bildes unterschiedliche Höhen des Formteils an der entsprechend abgebildetezt Position dar. Eine Nullhöhe, beispielsweise die Oberfläche des den Untergrund des Formteils 2 ausbildenden Transportbands 3 erhält beispielsweise ein tiefes schwarz als Grauwert zugeordnet, wobei höher liegende Punkte des Formteils 2 einen zunehmend helleren Grauwert zugewiesen erhalten.

In einem nachfolgenden dritten Verfahrenschritt S3 werden aktiv Daten ausgeblendet, welche für die Lageerkennung nicht relevant sind oder allenfalls untergeordnete Bedeutung haben, Insbesondere wird ein Umgebungsbereich des Formteils 2 ausgeblendet, welcher sich als schwarzer Grauton von der höherliegenden Umfangskontur des Formteils 2 markant abhebt. Außerdem ausgeblendet werden Messungs-Totbereiche, d. h. Kamerabildbereiche ohne sinnvollen Datengehalt, wie beispielsweise der Schattenbereich 16, welcher durch die Kamera 10 nicht erfassbar ist. Vorteilhafterweise ist auch der Innenbereich des Formteil 2 im Fall eines keramischen Haushaltsguts ausblendbar, da Schalen, Sclailsseln und Teller üblicherweise einen konturlosen und im Wesentlichen flachen Boden aufweisen. Kriterium zum Auslöschen bzw. Ausblenden dieses Innenbereichs kann beispielsweise die entsprechend große Fläche mit einheitlicher Graustufe sein. Außerdem werden vorteilhafterweise Fehlerbereiche ausgeblendet, welche fertigungstechnisch keine zuverlässigen Konturen des Formteils 2 aufweisen, wie beispielsweise die erste Kontur K1 des Umfangsrands des Formteils 2, da an dem Umfangsrand der in der Regel undefiniert ausgebildete Grad 8 sitzt und daher keine fehlerfrei erkennbare Kontur zulässt.

In einem nachfolgenden vierten Schritt S4 werden die verbleibenden Bilddaten nach charakteristische Konturen und Bereichen analysiert, welche in den Bilddaten erfassbar sind. Dies können beispielsweise im Fall des in Fig. 2 dargestellten Formteils die dritte und vierte Kontur K3, K4 sein, welche im mittleren Bereich der inneren Umfangswand 18 des Formteils 2 einen prägnanten Absatz ausbilden. Als charakteristischer Bereich bzw. charakteristische Kontur im weiteren Sinne kann aber auch eine prägnanten Krümmung oder dergleichen der Umfangswandung oder gegebenenfalls auch der Bodenwandung verwendet werden. Insbesondere kann zum Auswählen einer bestimmten gewünschten Kontur verfahrensgemäß deren Konturlänge vorgegeben werden, welche in den Bilddaten erkennbar sein müsste, was eine weitere Automatisierung ermöglicht.

In einem nachfolgenden fünften Schritt S5 werden die derart ermittelten Konturen K3, K4, mit entsprechenden Konturdaten eines Urmodells bzw, Ur-Formteils verglichen, welches als Referenzteil vorzugsweise fehlerfrei ideale Konturen aufweisen sollte. Anstelle zuvor abgemessenen oder mit der Lageorkennungsvorrichtung aufgezeichneten Bild- und Konturdaten eines solchen Ur-Formteils können natürlich auch theoretisch berechnete oder manuell eingegebene entsprechende Daten für den Vergleich mit den jeweils hinsichtlich der Lage zu erfassenden Formteilen 2 verwendet werden.

Die Lageerkennung durch den Vergleich mit vorberechneten oder vorbestimmten Urmodalldaten eines Ur-Formteils 2 erfolgt vorzugsweise iterativ, um den Rochenaufwand zu reduzieren. Dazu wird eine Baumstruktur aufgebaut, in welcher charakteristische Winkelpositionen hinterlegt sind. Verglichen wird somit in einem ersten Schritt, ob eine am momentan zu untersuchenden Formteil 2 erkannte Kontur K3, K4 in einem ersten oder einem zweiten Winkelbereich der ersten Stufe des Baummodells einzuordnen ist. Nach dieser Bestimmung wird wiederum eine Untergliederung vorgenommen, um iterativ in einer vorgegebenen Anzahl von Iterationsschritten mit jeweils lediglich einem Vergleich der erfassten Winkellage einer Kontur K3, K4 des Formteils 2 mit einer entsprechenden theoretischen Lage der entsprechenden Kontur K3, K4 des Ur-Formteils eine entsprechend exakte Ausrichtung des momentan zu erfassenden Formteils 2 zu bestimmen. Anstelle eines sehr großen Rechenaufwands zur Bestimmung der Ausrichtung einer Kontur K3, K4, welche sich in einer Punkfwolke oder auch reduzierten Anzahl von Bilddaten befindet, wird ein großer Rechenaufwand lediglich einmal mit Hilfe des Ur-Formteils vorgenommen, um dessen theoretisch verschiedenartigsten Lagedaten in einem Speicher der zentralen Steuereinrichtung 15 zu hinterlegen. Nachfolgend sind lediglich Vergleiche der markanten Konturdaten erforderlich, beispielsweise nach einer Ermittlung der Länge einer bestimmten prägnanten Kontur K3 des momentanen Formteils 2 und dessen Ausrichtung ein einfacher Vergleich mit entsprechenden Lagewerten der vorberechneten Vielzahl von Daten des Ur-Formteils 2. Die erzielbare Genauigkeit bei der Bestimmung der Ausrichtung bzw. Lage des Formteils 2 hängt lediglich von der Anzahl der Iterationsschritte ab. Neben einer Untergliederung in eine einfache Baumstruktur mit jeweils einer lediglich zweifachen Verästelung sind natürlich auch Iterationen mit einer stärkeren Verästelung pro Iterationsstufe möglich.

Vorteilhafterweise wird in einem nachfolgenden sechsten Verfahren schritt S6 noch eine Lagetoleranz herausgerechnet, um eventuelle Unebenheiten des Transportbands 3 oder der Bodenfläche des Formteils 2 bei der Lageberechnung berücksichtigen zu können.

Vorteilhafterweise kann mit den derart bestimmten Lagedaten bzw. Konturdaten nicht nur die Lage des momentan auf dem Transportband 3 befindlichen Formteils 2 zur nachfolgenden richtigen Aufnahme an den Roboter 4 weitergegeben werden. Auch nachfolgende Bearbeitungsschritte, welche mit dem Roboter 4 oder weiteren Vorrichtungen durchgeführt werden, können mittels der derart erfassten Lagedaten eine korrekte Nachbearbeitung des Formteils 2 ermöglichen.

Besonders vorteilhaft ist die Verwendung der tatsächlichen Konturdaten bzw. der aus den zur Lagebestimmung verwendeten Konturdaten K3, K4 berechenbaren Außenkontur als der ersten Konturdaten K1 für eine Programmierung einer nachfolgenden Putzstation. Unter den tatsächlichen Konturdaten werden dabei die individuell vorliegenden Konturdaten K1 des jeweiligen Formteils 2 verstanden, welche von Formteil zu Formteil aufgrund unterschiedlicher Schrumpfung oder Expansion des Material entstehen. Die tatsächliche Formteil-individuelle Kontur eines solchen Formteils 2 bestimmt sich aus Schwund oder Wachstum abhängig vom aktuell verwendeten Pulver oder Granulat im Fall eines gepressten Formteils 2. Da keramische Materialien als organische Materialien stets Schwankungen hinsichtlich der Beschaffenheit unterliegen, sind von Formteil zu Formteil Expansionen mit Differenzen von bis zu 1 % oder mehr möglich. Selbst innerhalb einer Charge von Pulver sind bei designten Modellen mit verschiedenen Dicken der Wandungen des Formteils Schwankungen um 0,2 - 0,3 % von Formteil zu Formteil möglich. Aus insbesondere inneren Konturdaten K3, K4, welche zur Lageerkennung bevorzugt verwendet werden, wird dazu auf die zu putzende erste Außenkontur K1 oder eine andere nachzubearbeitende oder zu verputzende Kontur hochgerechnet. Dadurch wird nicht nur eine Lageerkennung des Formteils 2 unabhängig vom noch zu bearbeitenden Rand sondern insbesondere auch eine Lageerkennung einer zu bearbeitenden ersten Kontur K1, welche aufgrund Fehlerhaftigkeit durch anhaftenden Grad 8 nicht eindeutig identifizierbar wäre, ermöglicht.

Vorteilhafterweise können die derart für ein Formteil 2 ermittelten Lagedaten und Konturdaten auch zum Programmieren einer konkreten Nachbearbeitung zum Verputzen eines Umfangrands verwendet werden. Im Falle eines Formteils 2 mit Eckbereichen kann die entsprechende Außenkontur des Formteils nicht durchgehend und kontinuierlich längs einer Bürste 7 der Bearbeitungsstation 6 entlang geführt werden, da ansonsten aufgrund der langsamen Drehbewegung im Eckbereich eine zu lang andauernde Putzbearbeitung durch die Bürste 7 erfolgen würde. Vorteilhafterweise wird daher eine Programmierung der Bearbeitungs- bzw. Putzvorrichtung 6 derart vorgenommen, wie dies in Figur 4 skizziert ist. Die Außenkontur K1 des Formteils 2 wird geradlinig an der Bürste 7 vorbeigeführt, und zwar über die entsprechende Kante hinaus. Nachfolgend wird das von der Bürste 7 beabstandet Formteil um beispielsweise 90 ° gedreht, um die nächste Kante des Formteils 2 wiederum in einer im Wesentlichen linearen Bewegung an der Bürste 7 und über diese hinaus vorbeizuführen. Mit Hilfe der tatsächlichen Konturdaten aus dem Lageerkennungsverfahren kann somit eine automatische Programmierung des Putzvorgangs durchgeführt werden, welche unabhängig von einem einheitlichen teachen mittels des Ur-Formteils ist.

Besonders vorteilhaft sind somit beim Lageerkennungsverfahren das Heraussuchen einer prägnanten oder signifikanten Kontur aus einer Vielzahl möglicher Konturen sowie das rechnerische Bestimmen der Schwerpunktlage der Kontur durch Vergleich mit einem Referenzbild bzw. durch einen Vergleich mit Referenzkorrekturen. Im Idealfall reichen dafür zwei markante Punke oder dreidimensionale Strukturelemente des Formteils aus, welche unabhängig von der Lage des Formteils 2 auf dem Transportband 3 stets erfassbar sind. Sollte aufgrund der konkreten Formgebung des Formteils 2 und einer zu starken Abschattung die Bestimmung einer bestimmten prägnanten Kontur nicht stets möglich sein, können auch zwei oder mehr derartige prägnante Konturen zur Lageerkennung herangezogen werden.

Berücksichtigbar sind auch Fehler im Bereich der Konturen durch das Heranziehen weiterer prägnanter Konturen für z.B. den Fall, dass eine bevorzugte Kontur fehlerhaft und durch das Lageerkennungaverfahren nicht oder nicht eindeutig genug erkennbar ist. In einem solchen Fall kann außerdem automatisch eine Nachbearbeitung oder eine Aussonderung des Formteils veranlasst werden.

Die Verwendung von Winkellagen ausgewählter Konturen berücksichtigt vorteilhafterweise auch, dass eine 100 %-ige Skalierung aufgrund Schrumpfung und Wachstum im Fall gepresster Formteile 2 nicht möglich ist und entsprechend stets systembedingt Fehler entstehen, die rechnerisch zugelassen und berüchsichtigt werden können. Durch vorteilhafterweise rechnerischen Vergleich mit vorbestimmten Konturlagen eines Ur-Formteils wird der eigentliche Rechenaufwand von dem jeweils momentanen Lageerkennungsverfabren für ein konkretes Formteils 2 auf einen ftheren Zeitpunkt im Rahmen der Erfassung eines Ur-Formteils verlagert.

Durch die Reduktion der zu betrachtenden Bildbereiche bzw. das Ausblenden nicht relevanter Bildbereiche kann die tatsächlich zu berücksichtigende Datenmenge von einer immensen Punktwolke auf eine geringe Anzahl von Datenpunkten reduziert werden.

Vorteilhafterweise kann dabei auf entsprechende Hardware- oder Softwarefunktionen der einzelnen Komponenten, insbesondere der Kamera 10 zurückgegriffen werden. Insbesondere können Signalprozessoren in einer solchen Kamera 10, sofern diese mit programmierbaren Prozessoren oder programmierbaren Softwaremodulen ausgestattet ist, entsprechend programmiert werden, so dass bereits von der Kamera 10 nur relevante Daten oder Datenmengen erfasst und/oder ausgegeben werden. Statt kompletter Bilder ist beispielsweise nur das Erfassen und/oder Ausgeben reiner Höheneinformationen über verschiedene Datenkanäle der Kamera 10 für die nachfolgenden Verfahrensschritte der Lageerkennung erforderlich.

Neben dem Putzen z.B, keramischer Formteile können mit einem solchen Verfahren und derart bestimmten Kontur- und Lagewerten auch Formteile dekoriert werden.

## Patentansprüche

1. Verfahren zur Lageerkennung eines, insbesondere nicht rotationssymmetrischen Formteils (2), bei dem
- mittels einer Lichtquelle (11) das Formteil (2) punkt- oder linienförmig unter einem ersten Winkel angeleuchtet wird und mittels einer Kamera (10) ein Kamerabild unter einem dazu verschiedenen Winkel aufgenommen wird zum Bereitstellen eines dreidimensionalen Abbildes des Formteils (2),
- eine Kontur (K1) innerhalb des Abbildes des Formteils (2) erfasst wird und
- mittels der Kontur auf die Lage des Formteils (2) geschlossen wird,
**dadurch gekennzeichnet , dass**
vor oder bei dem Konturerfassen Datenanteile nicht relevanter Daten des Kamerabildes durch deren Ausblenden reduziert werden.

2. Verfahren nach Anspruch 1, bei dem das Kamerabild als Höhenbfiormationsbild bereitgestellt wird.

3. Verfahren nach Anspruch 2, bei dem das Höheninformationsbild als Graustufenbild mit verschiedenen Grautonwerten für verschiedene Formteilhöhen bereitgestellt wird.

4. Verfahren nach einem vorstehenden Anspruch, bei dem vor dem Konturerfassen strukturloser Bereiche, insbesondere ein Bodenbereich (17) des Formteils (2), ein Umgebungsbereich (3) und/oder ein Randbereich mit einer Außenkontur (8, K1) ausgeblendet.

5. Verfahren nach einem vorstehenden Anspruch, bei dem potenziell fehlerbehaftete Bereiche, insbesondere ein Randbereich mit Pressgrat (8) ausgeblendet werden.

6. Verfahren nach einem vorstehenden Anspruch, bei dem Messtotbereiche, insbesondere bei der Aufnahme des Kamerabildes abgeschattete Bereiche oder je nach Formteilausrichtung möglicherweise abgeschattete Bereiche ausgeblendet werden.

7. Verfahren nach einem vorstehenden Anspruch, bei dem Steigungakanten (K3, K4) als Kontur zum Konturerfassen verwendet werden.

8. Verfahren nach einem vorstehenden Anspruch, bei dem verschiedene Konturebenen (K3, K4) als Kontur zum Konturerfassen verwendet werden.

9. Verfahren nach einem vorstehenden Anspruch, bei dem eine oder mehrere bestimmte Konturen (K3, K4) aus einer Vielzahl möglicher Konturen (K1-K6) zum Konturerfassen ausgewählt werden.

10. Verfahren nach einem vorstehenden Anspruch, bei dem eine oder mehrere kontrastreiche Konturen (K2, K6) aus einer Vielzahl möglicher Konturen (K1- K6) zum Konturerfassen ausgewählt werden.

11. Verfahren nach einem vorstehenden Anspruch, bei dem eine Auswahl von zum Konturerfassen zu verwendenden Konturen aus einer Vielzahl möglicher Konturen nach einer vorgebbaren Umfangslänge bestimmter Konturen durchgeführt wird.

12. Verfahren nach einem vorstehenden Anspruch, bei dem
- mittels eines Ur-Formteils (2) eine Vielzahl von Lagebildern des Ur-Formteils hinsichtlich aller oder bestimmter ausgewählter Konturen bestimmt und gespeichert wird und
- ein Vergleich der Lage eines zu erfassenden Formteils (2) hinsichtlich dessen Kontur oder Konturen zu der Lage entsprechender gespeicherter Konturen des Ur-Formteils (2) durchgeführt wird.

13. Verfahren nach Anspruch 12, bei dem der Vergleich der Lage einer Kontur des Formteils (2) mit dem Vergleich einer entsprechenden Kontur des Ur-Formteils anhand der Winkellage der Kontur des Formteils zu der Kontur des Ur-Formteils durchgeführt wird.

14. Verfahren nach einem vorstehenden Anspruch, bei dem eine Lagetoleranz des Formteils (2) beim Konturerfassen und/oder bei der Lageerkennung berücksichtigt wird.

15. Verfahren nach einem vorstehenden Anspruch, bei dem die mittels des Konturfassens bestimmten Lagedaten des Formteils (2) für nachfolgende automatische Bearbeitungen des Formteils (2) verwendet werden.

16. Verfahren nach einem vorstehenden Anspruch, bei dem aus der Lage einer Kontur (K3, K4) innerhalb des Formteils (2) auf eine Sollkontur (K1) an einer anderen Stelle des Formteils (2), insbesondere am Rand des Formteils (2) geschlossen wird.

17. Lageerkennungsvorrichtung (9) zum Durchführen eines Verfahrens nach einem vorstehenden Anspruch mit
- einer Zuführungsvorrichtung (3) zum Zuführen eines Formteils (2),
- einer Lichtquelle (11) zum Beleuchten des Formteils mit einem punkt- und/oder linienförmigen Lichtstrahl (12),
- einer Kamera (10) zum Aufnehmen eines Kamerabildes unter einem Winkel ungleich einem Beleuchtungswinkel des Lichtstrahls (12) zum Aufnehmen eines dreidimensionalen Kamerabildes des Formteils (2),
- einer Handhabungsvorrichtung und/oder einer Nachbearbeitungsvorrichtung (6), insbesondere einem Roboter (4) und einer Putzvorrichtung (6,7), und
- einer Steuereinrichtung (15) zum Steuern der Anordnung und Durchführen des Verfahrens zur Lageerkennung.

18. Lageerkennungsvorrichtung nach Anspruch 17, wobei die Kamera (10) und die Lichtquelle (11) relativ zum Formteil (2) mittels eines Schlittens (14) bewegbar sind.

19. Verfahren zum Programmieren einer Bearbeitungskontur, insbesondere Putzkontur eines Formteils (2) zum Bearbeiten des Formteils (2) in einer Bearbeitungsvorrichtung, insbesondere Putzvorrichtung (6,7), längs der Bearbeitungskontur (K1),
**dadurch gekennzeichnet ,dass**
- eine tatsächliche Bearbeitungskontur (K1) als die Bearbeitungskontur mittels einer optischen Lageerkennungsvorrichtung und/oder eines optischen Lageerkennungsverfahrens, insbesondere mittels einer Lageerkennungsvorrichtung nach einem der Ansprüche 17 oder 18 bzw. mittels eines Lageerkennungsverfahrens nach einem der Ansprüche 1 bis 16 zum Programmieren verwendet wird.

20. Verfahren nach Anspruch 19, bei dem eine Bewegungsbahn 20 des Formteils (2) relativ zur Bearbeitungsvorrichtung (7) anhand der tatsächlichen Kontur (K1) programmiert wird.

21. Bearbeitungsvorrichtung (4,6), insbesondere Putzvorrichtung zum Bearbeiten eines Formteils (2) mittels eines Verfahrens nach Anspruch 19 oder 20.

22. Verfahren bzw. Vorrichtung nach einem vorstehenden Anspruch, wobei die Lichtquelle (11) ein linienförmiges Laserlicht auf das Formteil (2) strahlt.
